# DEMANDE DE BREVET EUROPEEN

(11) **EP 3 901 118 A1**
(43) Date de publication de la demande: **27.10.2021**
(21) Numéro de dépôt: 21168766.0
(22) Date de dépôt: 16.04.2021
(51) Int. Cl.: C05F 17/60, C05F 17/70, C05F 17/90, C05F 17/979, C05F 17/907

(54) **DISPOSITIF POUR PRODUIRE UN COMPOST A PARTIR DE DECHETS ORGANIQUES**

(30) Priorité: 17.04.2020 FR 2003901
(71) Demandeur: Bio Tech Environnement, 91090 Lisses (FR)
(72) Inventeur: TORTI, Thierry, 91090 LISSES (FR)
(74) Mandataire: Loyer & Abello

(57) **Abrégé**

[L'invention concerne un dispositif pour produire un compost à partir de déchets organiques.

Ce dispositif comprend une cuve à double paroi, une cloison interne (1a) et une cloison externe (1b) délimitant entre elles un couloir (2), et munie d'un malaxeur et d'un couvercle. Le couloir (2) est à une extrémité, dite extrémité amont (2a), en relation avec l'air extérieur afin de l'aspirer et débouche à son autre extrémité, dite extrémité aval (2b), dans l'intérieur de ladite cuve (1), et comprend à son extrémité amont (2a) un dispositif pour chauffer (5) l'air aspiré. Il comprend également un extracteur d'air (8) afin d'extraire vers l'extérieur l'air présent à l'intérieur de la cuve (1) et de créer ainsi une aspiration d'air à l'extrémité amont (2a) du couloir (2) et une circulation d'air dans ledit couloir (2) en direction de l'extrémité aval (2b) de celui-ci.

Application au traitement des biodéchets notamment issus de la restauration collective et des bio déchets de la grande distribution.

## Description

### Domaine technique

La présente invention concerne un dispositif pour produire un compost à partir de déchets organiques.

Par déchets organiques sont désignés les déchets aussi bien d'origine végétale que d'origine animale : ils sont également appelés biodéchets. Ils comprennent en particulier les déchets alimentaires notamment issus de la restauration collective. Le traitement de tels déchets devient de plus en plus nécessaire afin de diminuer le tonnage des ordures dites ménagères collectées.

### Arrière-plan technologique

Le traitement des biodéchets est effectué soit par voie anaérobie, soit par voie aérobie : la première conduit généralement à la production de méthane, et la seconde à un compost (amendement organique type NFU 44 051).

Il existe déjà différents types de dispositifs pour réaliser des fermentations aérobies de biodéchets.

Parmi ceux-ci, on relève un dispositif dénommé « Cône vert » qui comprend un panier inférieur installé sous le niveau du sol et formant la base pour un cône intérieur noir et un cône extérieur vert muni d'un couvercle. Les biodéchets sont déversés dans le panier ; la chaleur produite par les rayons solaires entre les deux cônes favorise la circulation d'air entre eux, facilitant ainsi la croissance des micro-organismes nécessaires pour la décomposition aérobie. Un tel appareil ne peut être utilisé que pour traiter de petites quantités de biodéchets.

On connaît aussi un dispositif constitué par un long tube cylindrique isolé thermiquement dans lequel on introduit les biodéchets : les bactéries thermophiles se développent, transforment les différents déchets en fertilisant et produisent la chaleur jusqu'à atteindre la température de 70°C, idéale pour leur bon développement. Au bout de 4 jours environ on obtient un compost.

Il existe également un appareil constitué d'une cuve munie dans son fond d'un dispositif d'insufflation d'air : ceci permet notamment d'apporter l'oxygène nécessaire pour une bonne fermentation aérobie, et de maintenir la température optimale pour la fermentation microbienne. On comprend que l'air insufflé doit être chaud entraînant de ce fait des points chauds au fond de la cuve et un risque d'une caramélisation des produits s'y trouvant.

Enfin, on citera un appareil développé et commercialisé pour traiter les biodéchets de façon aérobie et thermophile. Cet appareil comprend une cuve qui est munie d'un agitateur pour brasser de tels déchets en présence d'un mélange de 33 espèces de bactéries, et qui est chauffée par de l'eau à une température comprise entre 60 et 70°C. Du compost peut ainsi être produit en 24 heures. Ce chauffage de l'eau pour obtenir et maintenir de telles températures est une source de dépense importante.

Ces derniers appareils connus peuvent, certes, traiter de grandes quantités de biodéchets en milieu aérobie telles que celles produites par les unités de restauration collective, mais présentent un certain nombre d'inconvénients tels que ceux mentionnés ci-dessus.

### Résumé

Une idée à la base de l'invention est de fournir un dispositif pour produire un compost à partir de déchets organiques qui est simple, énergiquement économe, assure une homogénéité du chauffage des déchets organiques à composter et permet ainsi d'obvier aux inconvénients des différents dispositifs connus.

Ce but ainsi que d'autres qui apparaîtront par la suite, est atteint par un dispositif pour produire un compost à partir de déchets organiques comprenant une cuve comportant un bac présentant un espace interne destiné à recevoir les déchets organiques et un couvercle recouvrant l'espace interne du bac, le bac présentant une paroi comprenant une cloison interne et une cloison externe délimitant entre elles un couloir de circulation d'air (double peau), ledit couloir présentant une extrémité amont, en relation avec l'air à l'extérieur du bac afin de l'aspirer et une extrémité aval débouchant dans l'espace interne du bac, le dispositif comprenant un dispositif de ventilation qui est agencé pour créer une aspiration d'air à l'extrémité amont du couloir (par dépression) et une circulation d'air dans ledit couloir en direction de l'extrémité aval de celui-ci et un dispositif de chauffage (une résistance par exemple) pour chauffer l'air aspiré dans le couloir.

Ainsi, le flux d'air chaud aspiré sert à la fois au chauffage de la paroi du bac et à l'aération du compost. Cette solution présente donc l'avantage d'économiser de l'énergie et de simplifier le système de chauffage. Elle permet également de chauffer la paroi de manière harmonieuse, sans point de chauffe plus important susceptible d'entraîner une caramélisation locale des déchets organiques contre la paroi.

Selon un mode de réalisation, la cloison externe est revêtue d'un isolant thermique.

Selon un mode de réalisation, le dispositif de chauffage est logé dans le couloir, de préférence à l'extrémité amont du couloir.

Selon un mode de réalisation, le dispositif de chauffage comporte une résistance à ailettes.

Selon un mode de réalisation, le dispositif comprend à l'extrémité aval du couloir un moyen pour injecter l'air dans la cuve.

Selon un mode de réalisation, le moyen pour injecter l'air dans la cuve est constitué par une buse, de préférence sous la forme d'une fente.

Selon un mode de réalisation, la buse injecte l'air le long de la cloison interne de la paroi.

Selon un mode de réalisation, la buse est dirigée vers le fond du bac.

Selon un mode de réalisation, le dispositif comporte un dispositif de préchauffage pour préchauffer l'air aspiré qui est situé en amont du dispositif de chauffage.

Selon un mode de réalisation, le dispositif de ventilation comporte un extracteur d'air comprenant un circuit d'extraction comportant une entrée située dans l'espace interne du bac et une sortie débouchant à l'extérieur de la cuve et un ventilateur agencé pour faire circuler de l'air de l'entrée vers la sortie du circuit d'extraction.

Selon un mode de réalisation, l'entrée du circuit d'extraction est située, dans l'espace interne de la cuve, à l'opposé de l'extrémité aval du couloir. Ceci permet une aération optimale des déchets organiques à composter stockés dans l'espace interne du bac.

Selon un mode de réalisation, le circuit d'extraction comporte un échangeur de chaleur qui est logé dans le couloir de manière à échanger de la chaleur de l'air extrait via le circuit d'extraction vers l'air circulant dans le couloir. Ainsi, l'air entrant est préchauffé par l'air sortant ce qui permet de limiter les calories évacuées à perte vers l'extérieur.

Selon un mode de réalisation, l'échangeur est disposé en amont du dispositif de chauffage.

Selon un mode de réalisation, le circuit d'extraction comporte en outre un filtre à charbon actif.

Selon un mode de réalisation, le dispositif comporte des capteurs de température disposés notamment en aval du dispositif de chauffage et à la sortie de l'extrémité aval du couloir et un dispositif de régulation pour piloter le dispositif de chauffage en fonction des signaux délivrés par lesdits capteurs de température.

Selon un mode de réalisation, le dispositif comporte en outre un malaxeur comportant un arbre équipé de pâles mobiles en rotation

Selon un mode de réalisation, la paroi précitée définit au moins une partie inférieure du bac contre lesquelles les biodéchets sont susceptibles de reposer.

Selon un mode de réalisation, le bac comporte deux parois latérales reliées l'une à l'autre par la paroi précitée, dite principale, la paroi principale définissant une face avant, une face arrière et un fond bombé du bac.

Selon un mode de réalisation, l'extrémité amont et l'extrémité aval du couloir sont ménagés respectivement au niveau des bords supérieurs des faces avant et arrière du bac.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] la figure 1 est une vue en perspective d'un dispositif pour produire un compost à partir de déchets organiques.
[fig.2] la figure 2 est une vue en coupe transversale du dispositif selon la figure 1.
[fig.3] la figure 3 est une vue agrandie du détail A de la figure 2.
[fig.4] la figure 4 est une vue en coupe selon la ligne B-B du détail A de la figure 2 .
[fig.5] la figure 5 est une vue en coupe selon la ligne C-C de la figure 4.
[fig.6] la figure 6 est une vue partielle de dessus du dispositif des figures 1 à 5.

### Description des modes de réalisation

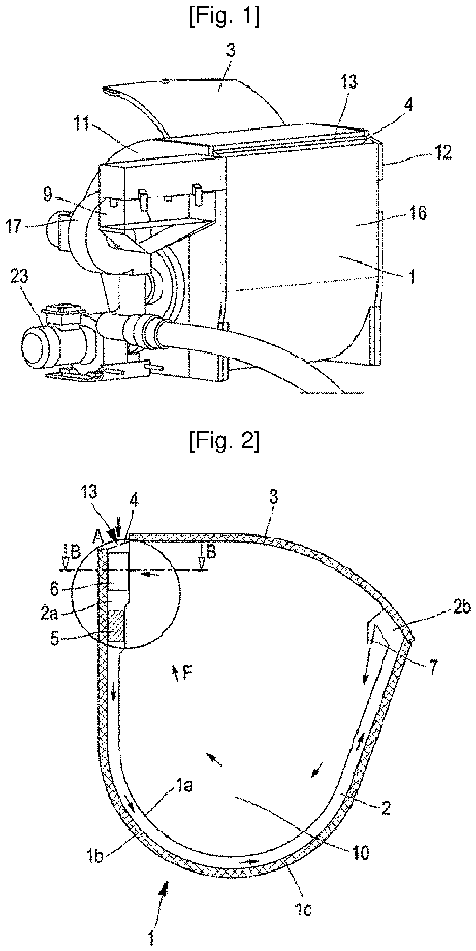

En relation avec la figure 1 à 6, on décrit un dispositif pour produire un compost à partir de déchets organiques.

Le dispositif comporte une cuve qui comprend un bac 1 présentant un espace interne 10 destiné à recevoir les déchets organiques et un couvercle 3 recouvrant l'espace interne 10 et présentant un volet mobile apte à être relevé dans une position ouverte afin d'autoriser le chargement de l'espace interne 10 du bac 1 avec des déchets organiques et son déchargement.

Comme représenté sur la figure 1, le bac 1 comporte deux parois latérales 11, 12 reliées l'une à l'autre par une paroi principale 16 définissant la face avant, la face arrière et le fond bombé du bac 1.

Comme visible notamment sur la figure 2, la paroi principale 16 est à double cloison, c'est-à-dire qu'elle comporte une cloison interne 1a et une cloison externe 1b délimitant entre elles un couloir 2 de circulation d'air. La cloison externe 1b est en un matériau isolant ou est revêtue, comme représenté sur les figures, d'un tel matériau 1c. La cloison interne 1a est, par exemple, réalisée dans une tôle de fer.

Dans le mode de réalisation représenté, les parois latérales 11, 12 et le couvercle 3 sont à simple cloison. Ils présentent une structure identique celle de la cloison externe 1b de la paroi principale 16. Dans d'autres modes de réalisation non représentés, les parois latérales 11, 12 peuvent également être à double cloison et présenter ainsi un espace intercalaire qui est relié au couloir 2 précité, ce qui permet ainsi d'assurer également un chauffage des parois latérales 11, 12.

Comme représenté sur la figure 2, le couvercle 3 s'étend entre la cloison interne 1a de la portion de la paroi principale 16 définissant la face arrière jusqu'à la cloison externe 1b de la portion de la paroi principale 16 définissant la face avant. Le couvercle 3 recouvre ainsi de manière sensiblement étanche le bac 1.

Le couloir 2 présente une extrémité, dite extrémité amont 2a, qui est en relation avec l'air extérieur : elle constitue l'entrée d'air dans le couloir 2. L'extrémité amont 2a est ménagée au nveau du bord supérieure de la portion de la paroi principale 16 définissant la face arrière du bac 1.

L'extrémité amont 2a est recouverte par un obturateur 4 qui présente une ouverture d'admission 13 au travers duquel l'air extérieur est aspiré dans le couloir 2. Comme représentée sur la figure 1, dans le mode de réalisation représenté, l'ouverture d'admission 13 est une fente qui s'étend sensiblement le long de ladite extrémité amont 2a, entre le deux parois latérales 11, 12

L'extrémité amont 2a est équipée d'un dispositif de chauffage 5 permettant de chauffer l'air aspiré par l'extrémité amont 2a et mis en circulation dans le couloir 2. Le dispositif de chauffage 5 comporte, par exemple, une résistance à ailettes.

L'autre extrémité du couloir 2, dite extrémité aval 2b, débouche dans l'espace interne 10 du bac 1. Plus particulièrement, le bac 1 et comporte un moyen pour injecter l'air chaud dans la cuve, de préférence le long de la cloison interne 1a. Ce moyen est, par exemple, une buse 7. La buse 7 est avantageusement dirigée vers le fond du bac 1 afin de permettre une meilleure aération des déchets organiques à composter. Selon un mode de réalisation avantageux, la buse 7 est également une fente s'étendant le long du bord supérieur correspondant de la paroi principale 16 Dans le mode de réalisation représenté, afin de diriger le flux d'air vers le fond du bac 1, les parois interne 1a et externe 1b sont repliées vers l'intérieur du bac et dirigées vers son fond, au niveau de l'extrémité aval 2b du couloir 2.

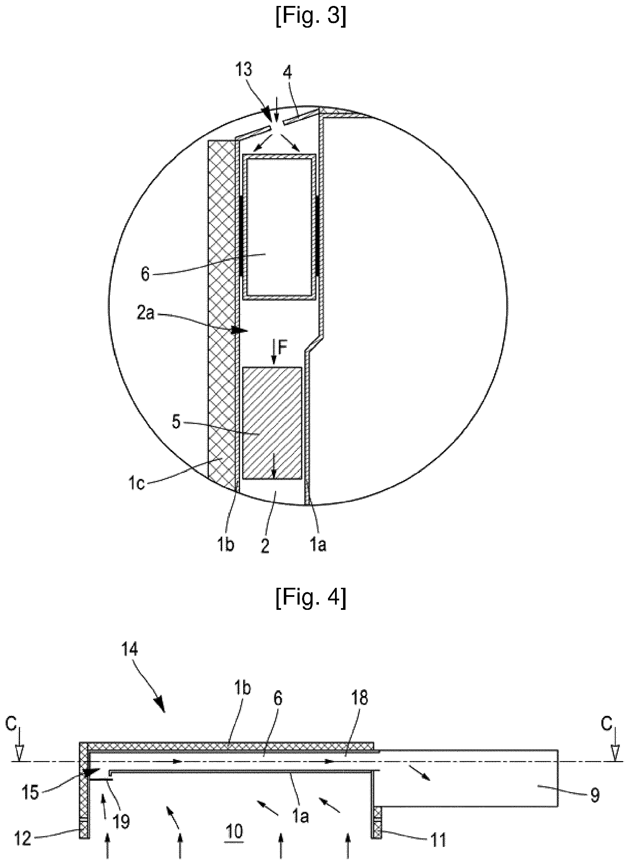

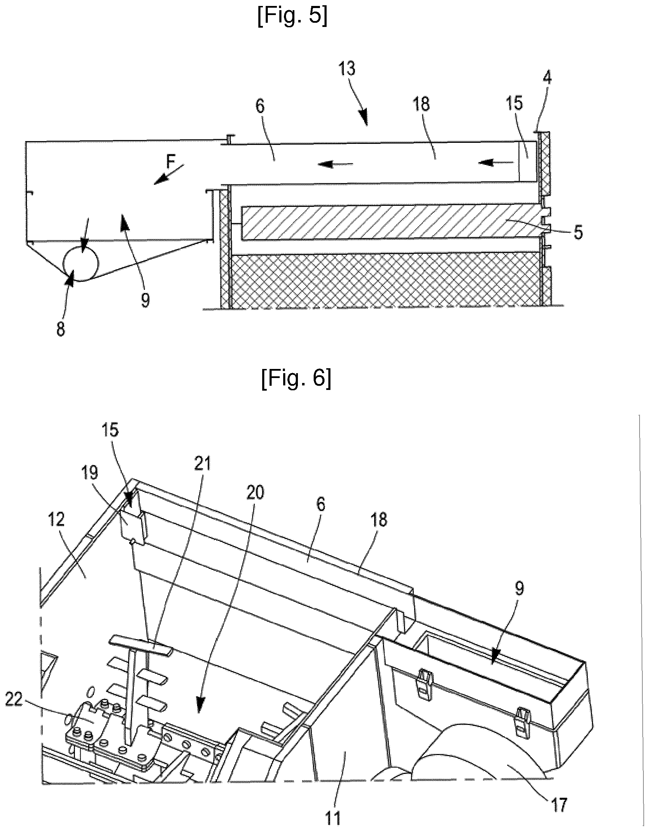

Par ailleurs, le dispositif est équipé d'un dispositif de ventilation qui est agencé pour créer une circulation d'air à l'intérieur du couloir 2 de l'extrémité amont 2a vers l'extrémité aval 2b. Dans le mode de réalisation représenté, le dispositif de ventilation est un extracteur d'air 8, notamment représenté sur les figures 4 et 5.

L'extracteur d'air 8 comporte un circuit d'extraction 14 qui comprend une entrée 15 située dans l'espace interne 10 du bac 1, une sortie, non représentée, débouchant à l'extérieur de la cuve ainsi qu'un ventilateur 17 permettant d'extraire de l'air de l'espace interne 10 du bac 1 vers l'extérieur, en faisant circuler un flux d'air de l'entrée 15 vers la sortie du circuit d'extraction 14. De manière avantageuse, l'entrée 15 du circuit d'extraction 14 est située, dans l'espace interne 10 du bac 1, à l'opposé de l'extrémité aval 2b du couloir 2 de manière à permettre une aération optimale des déchets organiques à composter. Lorsque l'extracteur d'air 8 est mis en fonctionnement, il crée une dépression dans l'espace interne 10 du bac 1, ce qui a pour effet d'aspirer de l'air au travers du couloir 2 de l'extrémité amont 2a vers l'extrémité aval 2b.

Dans la mode de réalisation représenté, l'entrée 15 du circuit d'extraction 14 est située, par exemple, au voisinage de l'extrémité amont 2a du couloir 2.

Par ailleurs, de manière avantageuse, comme représenté sur les figures 3, 4 et 5, le circuit d'extraction 14 présente un échangeur de chaleur 18 qui est logé dans l'extrémité amont du couloir 2 ménagée entre la cloison interne 1a et la cloison externe 1b de la paroi principale 16. L'échangeur de chaleur 18 est avantageusement disposé en amont du dispositif de chauffage 5. L'échangeur de chaleur 18 constitue ainsi un dispositif de préchauffage 6 qui permet de préchauffer l'air circulant dans le couloir 2, en amont du dispositif de chauffage 5.

De manière avantageuse, le circuit d'extraction 14 comporte un filtre à charbon actif 9 permettant de désodoriser le flux d'air qui est extrait de l'espace interne 10 du bac 1 avant de le rejeter dans l'atmosphère. Le circuit d'extraction 14 peut également comporter une grille 19, par exemple disposée à l'entrée 15 du circuit d'extraction 14, permettant de retenir les particules de déchets organiques, en amont du ventilateur 17 afin de le protéger.

Par ailleurs, le dispositif comporte un ou plusieurs capteurs de température ainsi qu'un dispositif de régulation qui est agencé pour piloter le dispositif de chauffage. Le dispositif de chauffage 5 est piloté en fonction d'une température de consigne et d'une ou plusieurs mesures de températures délivrées par des capteurs. De manière avantageuse, le dispositif comporte un capteur de température disposé en aval du dispositif de chauffage 5 et un capteur de température disposé à la sortie de la buse 7 afin de réguler au mieux le dispositif de chauffage 5 et donc de contrôler l'apport d'énergie nécessaire au dispositif de chauffage 5. Le dispositif peut également comporter un capteur de température qui est placé dans l'espace interne 10 du bac 1 et qui est agencé pour mesurer la température des déchets organiques dans l'espace interne 10 du bac 1.

Selon un mode de réalisation avantageux, le dispositif comporte également un malaxeur 20 ou mélangeur, illustré sur la figure 6. Le malaxeur 20 comporte un arbre horizontal 21 qui est monté mobile en rotation autour d'un axe horizontal orthogonal aux parois latérales 11, 12. L'arbre horizontal 21 est supporté par des paliers fixés sur les parois latérales 11, 12. L'arbre horizontal 21 est équipé de pâles 22 permettant de mélanger les déchets organiques et améliorer encore davantage leur aération. L'arbre horizontal 21 est raccordé par un dispositif de transmission du mouvement, par exemple une chaîne ou une courroie (ou d'un moteur flasqué), à l'arbre de sortie d'un moteur 23, représenté sur la figure 1.

Le fonctionnement du dispositif décrit ci-dessus est le suivant.

Une fois la cuve remplie de déchets organiques et le couvercle 3 rabattu, on met en route l'extracteur d'air 8, ce qui provoque une circulation d'air selon les flèches F.

Tout d'abord, l'air extérieur est aspiré au travers de l'obturateur 4, passe le long du dispositif de préchauffage 6, puis au travers du dispositif de chauffage 5. A la sortie de ce dernier, la température de l'air ainsi chauffé est d'environ 80°C.

En circulant dans le couloir 2, il s'effectue un échange de chaleur entre cet air chauffé et les déchets malaxés dans la cuve au travers de la cloison interne1a. Dans le couloir 2, l'air chauffé circule à une vitesse de l'ordre de 2,5 à 3 m/s (débit de 64 à 77m3/h) de telle sorte qu'il n'existe aucun point de surchauffe dans la cloison interne 1a, mais un chauffage homogène de celle-ci.

A l'extrémité aval 2b du couloir 2, l'air chauffé est alors injecté par la buse 7 le long de la cloison interne1a ce qui permet d'apporter de l'oxygène et un supplément de calories dans la masse de déchets organiques malaxés : ceci, d'une part, ne peut que favoriser l'action de microorganismes présents, et, d'autre part, entraîne une diminution du taux d'humidité de cette masse. De plus, ce flux d'air chauffé participe à une bonne aération du mélange et permet donc une action microbienne dans des conditions optimales.

Sous l'action de l'extracteur d'air 8, l'air présent dans l'espace interne 10 du bac 1 est extrait au travers de l'échangeur de chaleur 18 du circuit d'extraction 14 et échange ainsi des calories avec l'air extérieur aspiré de sorte à constituer ainsi le dispositif de préchauffage 6. La température de l'air extrait est par exemple d'environ 35°C.

A la sortie du circuit d'extraction 14, l'air extrait est évacué vers l'extérieur éventuellement après avoir traversé un filtre à charbon actif 9 afin de le désodoriser.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication. |

## Revendications

1. Dispositif pour produire un compost à partir de déchets organiques comprenant une cuve comportant un bac (1) présentant un espace interne (10) destiné à recevoir les déchets organiques et un couvercle (3) recouvrant l'espace interne (10) du bac (1), le bac (1) présentant une paroi (16) définissant au moins une partie inférieure du bac contre lesquelles les biodéchets sont susceptibles de reposer qui comprend une cloison interne(1a) et une cloison externe (1b) délimitant entre elles un couloir (2) de circulation d'air, ledit couloir (2) présentant une extrémité amont (2a), en relation avec l'air à l'extérieur du bac (1) afin de l'aspirer et une extrémité aval (2b) débouchant dans l'espace interne (10) du bac (1), le dispositif comprenant un dispositif de ventilation (8) qui est agencé pour créer une aspiration d'air à l'extrémité amont (2a) du couloir (2) et une circulation d'air dans ledit couloir (2) en direction de l'extrémité aval (2b) de celui-ci et un dispositif de chauffage (5) pour chauffer l'air aspiré dans le couloir (2) qui est logé dans le couloir (2) à l'extrémité amont du couloir (2).

2. Dispositif selon la revendication 1, comprenant à l'extrémité aval (2b) du couloir (2) un moyen pour injecter l'air dans la cuve.

3. Dispositif selon la revendication 2, dans lequel le moyen pour injecter l'air dans la cuve est constitué par une buse (7).

4. Dispositif selon la revendication 3, dans lequel la buse (7) injecte l'air le long de la cloison interne(la) du bac (1).

5. Dispositif selon l'une quelconque des revendications 1 à 4, dans lequel le dispositif de ventilation comporte un extracteur d'air (8) comprenant un circuit d'extraction (14) comportant une entrée (15) située dans l'espace interne (10) du bac (1) et une sortie débouchant à l'extérieur de la cuve et un ventilateur (17) agencé pour faire circuler de l'air de l'entrée (15) vers la sortie du circuit d'extraction (14).

6. Dispositif selon la revendication 5, dans lequel le circuit d'extraction (14) comporte un échangeur de chaleur (18) qui est logé dans le couloir (2) de manière à échanger de la chaleur de l'air extrait via le circuit d'extraction (14) vers l'air circulant dans le couloir (2).

7. Dispositif selon la revendication 6, dans lequel l'échangeur de chaleur (18) est disposé en amont du dispositif de chauffage (5).

8. Dispositif selon l'une quelconque des revendications 5 à 7, dans lequel le circuit d'extraction (14) comporte en outre un filtre à charbon actif (9).

9. Dispositif selon l'une quelconque des revendications 1 à 8, comprenant des capteurs de température disposés en aval du dispositif de chauffage (5) et à la sortie de l'extrémité aval (2b) du couloir (2) et un dispositif de régulation pour piloter le dispositif de chauffage (5) en fonction des signaux délivrés par lesdits capteurs de température.

10. Dispositif selon l'une quelconque des revendications 1 à 9 **caractérisé en ce qu'**il comporte en outre un malaxeur comportant un arbre (21) mobile en rotation et équipé de pâles (22).
